## Europäisches Patentamt

## European Patent Office

## Office européen des brevets

(19)

(11) Veröffentlichungsnummer: **0 187 783**
**B1**

(12) ## EUROPÄISCHE PATENTSCHRIFT

(45) Veröffentlichungstag der Patentschrift:
**07.12.88**

(21) Anmeldenummer: **85903216.1**

(22) Anmeldetag: **03.07.85**

(86) Internationale Anmeldenummer:
**PCT/DE 85/00224**

(87) Internationale Veröffentlichungsnummer:
**WO 86/00678 (30.01.86** Gazette 86/3)

(51) Int. Cl.⁴: **F 16 H 57/04,** F 16 N 19/00

(54) TAUCHSCHMIERSYSTEMS FÜR GETRIEBE VON KRAFTFAHRZEUGEN.

(30) Priorität: **06.07.84 DE 3424907**

(43) Veröffentlichungstag der Anmeldung:
**23.07.86 Patentblatt 86/30**

(45) Bekanntmachung des Hinweises auf die Patenterteilung:
**07.12.88 Patentblatt 88/49**

(84) Benannte Vertragsstaaten:
**AT BE CH DE FR GB IT LI LU NL SE**

(56) Entgegenhaltungen:
**DE-A- 1 576 398**
**DE-A- 2 317 007**
**DE-A- 2 903 617**
**DE-A- 3 208 100**
**FR-A- 854 747**
**FR-A- 2 443 002**
**US-A- 2 439 053**
**US-A- 3 246 934**

(73) Patentinhaber: **ZWN ZAHNRADWERK NEUENSTEIN GMBH & CO., Hermann-Hagenmeyer-Strasse, D-7113 Neuenstein (DE)**

(72) Erfinder: **MÜLLER, Erich, R., Hohe Strasse 15, D-7110 Öhringen-Cappel (DE)**

(74) Vertreter: **Witte, Alexander, Dr.-Ing., Schickhardtstrasse 24, D-7000 Stuttgart 1 (DE)**

# Beschreibung

Die Erfindung betrifft ein Schmiersystem für Getriebe von Kraftfahrzeugen mit einem an seiner Unterseite einen Ölsumpf bildenden Gehäuse, mit einer Zahnräder aufweisenden Getriebewelle, mit einem Hohlraum und mit Mitteln zum Überführen von Öl zwischen dem Ölsumpf und dem Hohlraum in Abhängigkeit von der Betriebstemperatur des Getriebes.

Ein derartiges Schmiersystem ist aus der FR-A-2 443 002 bekannt.

Bei dem bekannten System befinden sich die Zahnräder eines Getriebes in einem unteren Teil eines Getriebegehäuses, das an seiner Unterseite eine Ölwanne bildet. Im oberen Teil des Getriebegehäuses befindet sich ein Verteilerkörper, aus dem im Betrieb des Getriebes Öl austritt. Dieses austretende Öl wird in einer Vorratskammer gesammelt, die über eine Bohrung und ein daran anschliessendes Ventil mit dem unteren Ölsumpf verbindbar ist. Die Funktion des Ventils wird von der Betriebstemperatur des Getriebes gesteuert, und zwar derart, dass bei kaltem Getriebe das Ventil öffnet und bei warmem Getriebe das Ventil teilweise schliesst. Dies hat zur Folge, dass bei kaltem Getriebe das Öl unmittelbar aus der Vorratskammer in den untenliegenden Ölsumpf zurückströmt und dort einen bestimmten Ölspiegel einstellt. Wird das Getriebe nun warm, schliesst das Ventil teilweise, so dass sich Öl in der Vorratskammer ansammelt. Dieser Prozess ist so eingestellt, dass immer gerade soviel Öl in der Vorratskammer gespeichert wird, wie dies der Ausdehnung des Öls infolge der Temperaturerhöhung im Getriebe entspricht. Insgesamt wird damit der Ölspiegel in der Ölwanne konstant gehalten, er liegt bestimmungsgemäss so niedrig, dass die Zahnräder des Getriebes nicht in das Öl eintauchen.

Bei einer anderen Gattung von heute üblichen Getrieben von Kraftfahrzeugen werden sogenannte Tauchschmiersysteme verwendet. Bei diesen Systemen tauchen die Zahnräder des Getriebes mindestens teilweise in den Ölsumpf ein, wenn dieser vollständig mit Öl gefüllt ist. Die in das Öl des Ölsumpfes eintauchenden Zahnräder wirbeln dann das Öl während des Drehvorganges nach oben, so dass das Getriebegehäuse mit einem Ölnebel gefüllt ist, der für eine ausreichende Schmierung an allen erforderlichen Stellen sorgt.

Es hat sich jedoch gezeigt, dass bei extremen Betriebsbedingungen, insbesondere bei extrem tiefen Temperaturen, ein derartiges Tauchschmiersystem Nachteile mit sich bringt, weil das Getriebeöl bei diesen tiefen Temperaturen eine relativ hohe Viskosität annimmt und das hochviskose Öl eine Panscharbeit bzw. ein Schleppmoment des Getriebes erfordert, das vor allem die Synchronisiereinrichtungen des Getriebes so stark abbremst, dass es zu unsynchronisierten Schaltvorgängen kommt. Dies kann zu erheblichen Beschädigungen des Getriebes führen, weil heutige Kraftfahrzeuggetriebe im allgemeinen nicht mehr so ausgelegt sind, dass sie auch unsynchronisierte Fehlschaltungen vertragen, denn die vorhandenen Synchronisiereinrichtungen des Getriebes sorgen im Normalfalle für einen weichen Gangwechsel.

Aus der US-A-3 246 934 ist ein Notschmiersystem für Eisenbahnwagen bekannt, bei dem ein Notvorratsbehälter sich dann zwangsweise in ein Schmiersystem der Wagenachse entleert, wenn dieses trockenläuft und die sich einstellende Hitze eine vorbestimmte Schwelle überschreitet. Dieses bekannte System, das nicht für Kraftfahrzeuggetriebe vorgesehen ist, trägt jedoch den besonderen Bedingungen beim Kaltlauf von Kraftfahrzeuggetrieben nicht Rechnung.

Aus der DE-A-23 17 007 ist ein System bekannt, bei dem zwar in der Nähe einer Ölwanne ebenfalls ein Hohlraum vorgesehen ist, eine Überführung von Öl in diesen Hohlraum ist jedoch weder vorgesehen noch ist ein Absaugen des Öles in den Hohlraum möglich, weil der Hohlraum mit einer Entlüftungsbohrung versehen ist. Dieses bekannte System soll vielmehr bei Schräglagen des Kraftfahrzeuges durch Verkantung eines Schwimmers im Luftraum verhindern, dass Öl in diesen Luftraum eindringt und dann eine Absaugglocke im Ölsumpf leerläuft.

Aus der DE-A-32 08 100 ist noch ein Tauchschmiersystem für Kraftfahrzeuge mit einem neben dem Ölsumpf angeordneten Vorratsbehälter bekannt, aus dem Öl in Abhängigkeit von den Betriebsdaten des Getriebes in den Hauptraum überführt wird, damit ein bestimmtes Getriebeelement bei hohen Drehzahlen nicht trockenläuft. Auch dieses System sieht daher keine Massnahmen für den Fall des Kaltlaufes des Getriebes vor.

Schliesslich ist aus der DE-A-29 03 617 noch eine Trockensumpfschmierung für ein Kurbelgehäuse bekannt, bei dem der ansonsten niedrige Ölstand dann schlagartig erhöht werden kann, wenn eine gewünschte Motorbremsung durch zusätzliche Panscharbeit der Kurbelelemente vergrössert werden soll. Auch dieses bekannte System sieht daher keine besonderen Massnahmen für den Betrieb von Kraftfahrzeugen bei tiefen Temperaturen vor.

Der Erfindung liegt die Aufgabe zugrunde, ein Schmiersystem der eingangs genannten Art dahingehend weiterzubilden, dass es als Tauchschmiersystem verwendbar ist und auch bei extrem tiefen Temperaturen unsynchronisierte Fehlschaltungen vermieden werden, andererseits aber keine nachteiligen Auswirkungen auf das Schaltverhalten bei normaler Betriebstemperatur entstehen.

Diese Aufgabe wird erfindungsgemäss dadurch gelöst, dass die Zahnräder bei vollständig gefülltem Ölsumpf mindestens teilweise in das Öl eintauchen und dass bei niedriger Betriebstemperatur des Getriebes Öl aus dem Ölsumpf in den Hohlraum überführt wird.

Diese Massnahme hat den Vorteil, dass die Schmierwirkung des Tauchschmiersystems bei tiefen Temperaturen herabgesetzt wird, insbesondere kann kein aufgrund der tiefen Temperatur hochviskoses Öl mehr in die Synchronisiereinrichtungen gelangen und damit die Synchronisation der beim Gangwechsel in Eingriff miteinander zu bringenden Getriebeteile verhindern. Bei normaler Betriebstemperatur steht hingegen wieder die volle Ölmenge zur Verfügung, so dass ein Rasseln oder Klappern des Getriebes sicher vermieden wird.

Bei Ausführungsformen der Erfindung kann das Öl vom Ölsumpf in den Hohlraum bzw. umgekehrt mittels einer Pumpe o. dgl. überführt werden. Besonders bevorzugt ist jedoch ein Ausführungsbeispiel, bei dem das Öl durch Absaugen überführt wird, weil dabei keine gesonderten Elemente mit motorischem Antrieb vonnöten sind.

Bei einer besonders bevorzugten Ausgestaltung der Erfindung wird durch das Absaugen der Füllstand so weit abgesenkt, dass bei einer vorgegebenen unteren Grenz-Betriebstemperatur die Zahnräder nicht mehr in das Öl eintauchen.

Diese Massnahme hat den Vorteil, dass unterhalb der genannten Grenztemperatur überhaupt kein Ölnebel mehr im Getriebegehäuse erzeugt wird. Für die normalerweise zu schmierenden Zahnflanken kann dies in Kauf genommen werden, weil die untere Grenztemperatur bereits nach sehr kurzer Zeit, typischerweise einer Minute oder wenigen Minuten, bereits wieder überschritten wird und daher dann sofort wieder eine ausreichende Schmierung besteht. Lediglich die Synchronisiermittel werden während dieses kurzen Intervalls nicht durch aufgeschleudertes hochviskoses Öl benetzt und können daher störungsfrei arbeiten.

Bei einer weiteren Ausgestaltung der Erfindung ist der Hohlraum teilweise mit einem Material gefüllt, das einen grossen Temperaturkoeffizienten der Ausdehnung aufweist.

Diese Massnahme hat den Vorteil, dass keine gesonderten Ölpumpen o. dgl. erforderlich sind, sondern dass vielmehr ein Material fest im Hohlraum angeordnet werden kann, das keiner weiteren Wartung bedarf.

Eine besonders gute Wirkung wird bei diesem Ausführungsbeispiel dann erzielt, wenn das Material in einem elastischen Beutel enthalten ist und bei Überschreiten der Grenz-Betriebstemperatur verdampft.

Diese Massnahme hat den Vorteil, dass nahezu ein «Schaltverhalten» bei der genannten unteren Grenz-Betriebstemperatur eintritt, derart, dass oberhalb dieser Temperatur der Ölsumpf normal gefüllt ist und unterhalb der Grenztemperatur der Füllstand des Ölsumpfes schlagartig auf einen Betrag absinkt, in dem die Zahnräder nicht mehr in das Öl eintauchen und sich daher die oben beschriebenen Vorteile einstellen. Weiterhin ist durch diese Massnahme gewährleistet, dass bei Überschreiten der Grenztemperatur sofort wieder die normale Tauchschmierung zur Verfügung steht und daher die Füllstandsabsenkung wirklich nur in dem Temperaturbereich eintritt, in dem sie erforderlich ist.

Erfindungsgemäss kann das Material in diesem Fall ein Chlorfluorkohlenstoff sein, wie er unter dem Namen Frigen im Handel ist. Dieses Material wird grosstechnisch erzeugt und ist daher relativ billig.

Bei einer Ausführungsform der Erfindung ist der Hohlraum seitlich vom Gehäuse angeordnet und mit dem Ölsumpf über einen Durchgang verbunden.

Diese Massnahme hat den Vorteil, dass das erfindungsgemässe Tauchschmiersystem sehr kompakt aufgebaut werden kann, weil nur ein verhältnismässig kleiner seitlicher Anbau am Getriebegehäuse erforderlich ist.

Bei einer anderen Ausführungsform der Erfindung ist der Hohlraum der Hohlraum einer hohlen Getriebewelle.

Diese Massnahme hat zum einen den wesentlichen Vorteil, dass praktisch keine zusätzlichen Einbauten erforderlich sind, insbesondere werden die Aussenabmessungen des Getriebes nicht vergrössert. Zum anderen hat diese Massnahme den Vorteil, dass die Getriebehohlwelle, deren Hohlraum bei normaler Betriebstemperatur frei von Öl ist, wesentlich leichter ist als eine massive Getriebewelle und sich daher das Trägheitsmoment des Getriebes vermindert, was zu einer Erhöhung des Beschleunigungsvermögens bzw. zu einer Verminderung des Kraftstoffverbrauchs führt.

Besonders bevorzugt ist dabei, dass das Material in einem langgestreckten Beutel enthalten ist, weil so der Hohlraum der Getriebehohlwelle optimal voll- und leergepumpt werden kann.

Bei einer Variante der Ausführungsbeispiele, bei denen eine hohle Getriebewelle verwendet wird, kann die Verbindung vom Hohlraum zum Ölsumpf über eine flüssigkeitsdichte Drehkupplung und eine Leitung hergestellt werden.

Diese Massnahme ermöglicht es, den variablen Füllstand in der Ölwanne entweder alleine durch Saugwirkung oder aber auch durch in die Leitung eingeschaltete Pumpen o. dgl. zu variieren.

Bei einer anderen Variante dieser Ausführungsbeispiele ist jedoch der Hohlraum über radiale, durch einen Wellenmantel bzw. durch den Wellenmantel und Zahnräder führende Kanäle mit dem Ölsumpf verbunden.

Diese Massnahme hat den Vorteil, dass eine relativ aufwendige Drehkupplung nicht erforderlich ist, sondern dass vielmehr der Austausch des Öles zwischen dem Hohlraum in der Getriebewelle und dem Ölsumpf von selbst erfolgen kann.

Besonders bevorzugt ist dabei, wenn der lichte Querschnitt der Kanäle so bemessen ist, dass das Öl die Kanäle nicht mehr zu durchfliessen vermag, wenn seine Temperatur auf die niedrige Betriebstemperatur absinkt.

Diese Massnahme hat den Vorteil, dass bei einem Kaltstart des Motors das im Hohlraum der Getriebewelle enthaltene kalte Öl dort zunächst verbleibt, so dass in der Ölwanne ein niedrigerer Füllstand vorliegt. Erst wenn sich das Getriebe auf normale Betriebstemperatur erwärmt hat, wird das Öl so dünnflüssig, dass es unter Fliehkrafteinfluss durch den dann ausreichenden Querschnitt der Kanäle nach aussen in die Ölwanne abfliesst und dort den Füllstand erhöht.

Bei einer anderen Variante sind in den Kanälen Ventile angeordnet, die die Kanäle versperren, wenn die Temperatur auf die niedrige Betriebstemperatur absinkt.

Diese Massnahme hat dieselben Vorteile, wie sie bereits zum vorhergehenden Ausführungsbeispiel beschrieben wurden, wobei nun jedoch die Ventile die Funktion des für hochviskoses Öl zu engen Querschnitts der Kanäle übernehmen.

Schliesslich ist noch eine Variante bevorzugt, bei der in den Kanälen Ventile angeordnet sind, die die Kanäle versperren, wenn sie sich bei Drehung der Getriebewelle in einer nach oben geneigten Position befinden. Insbesondere sollen die Ventile dabei ein Schliessglied aufweisen, das das Ventil in der geneigten Position unter Schwerkrafteinfluss schliesst.

Diese Massnahme hat einen überraschenden weiteren Vorteil, weil nämlich nach dem Stillsetzen des Getriebes die aus dem Öl herausragenden Kanäle durch die Ventile verschlossen werden, so dass beim Abkühlen des Getriebes Öl aus dem Ölsumpf in den Hohlraum des Getriebes angesaugt wird. Bei vollständiger Abkühlung des Getriebes, insbesondere auf besonders niedrige Umgebungstemperaturen, kann sich der Hohlraum in der Getriebewelle nahezu vollständig füllen, während der Füllstand des Ölsumpfes auf einen entsprechend niedrigen Wert absinkt, der weit unterhalb des Füllstandes im Hohlraum der Getriebewelle liegt.

Die Massnahme, das Ventil mit einem schwerkraftbetätigten Schliessglied zu versehen, hat den Vorteil, dass dieses Schliessglied bei normalem Betrieb des Getriebes nicht stört, weil die bei Drehung der Getriebewelle auftretende Fliehkraft das Ventil ständig geöffnet hält.

Weitere Vorteile ergeben sich aus der Beschreibung und der beigefügten Zeichnung.

Die Erfindung ist in der Zeichnung dargestellt und wird in der nachfolgenden Beschreibung näher erläutert. Es zeigen:

Fig. 1 eine schematische Darstellung eines erfindungsgemässen Tauchschmiersystems bei sehr niedriger Betriebstemperatur;

Fig. 2 eine Darstellung gemäss Fig. 1, jedoch bei normaler Betriebstemperatur;

Fig. 3 ein Ausführungsbeispiel eines erfindungsgemässen Tauchschmiersystems mit einer hohlen Getriebewelle;

Fig. 4 eine Darstellung wie Fig. 3, vereinfacht, für eine Variante eines erfindungsgemässen Tauchschmiersystems;

Fig. 5a und 5b einen Schnitt entlang der Linie V-V für unterschiedliche Betriebszustände und unterschiedliche Ausführungsformen des Tauchschmiersystems gemäss Fig. 5;

Fig. 6a und 6b eine schematisierte Darstellung eines Ventils, wie es bei einer Ausführungsform eines Tauchschmiersystems gemäss der rechten Hälfte von Fig. 5b verwendet werden kann.

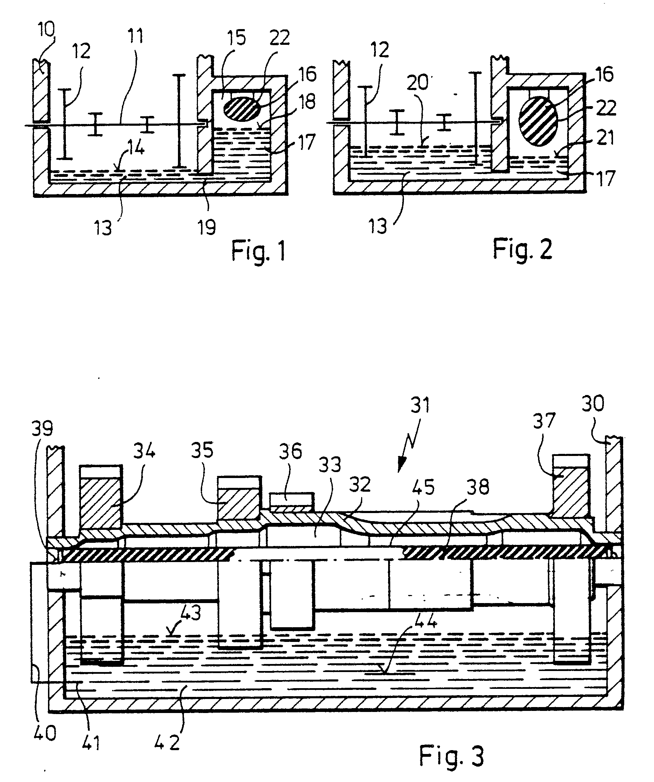

In Fig. 1 bezeichnet 10 schematisch ein Gehäuse eines Getriebes, in dem eine Getriebewelle 11 mit Zahnrädern 12 gelagert ist. Im unteren Bereich des Gehäuses 10 bildet dieses einen Ölsumpf 13, dessen Füllstand 14 in Fig. 1 so niedrig ist, dass die Zahnräder 12 nicht mehr in das Öl eintauchen.

Seitlich vom Gehäuse 10 befindet sich ein geschlossener Hohlraum 15, in dem ein Dehnkörper 16 angebracht ist. Im Hohlraum 15 befindet sich ein Ölvorrat 17 mit einem beim Betriebszustand gemäss Fig. 1 relativ hohen Füllstand 18. Der Hohlraum 15 ist mit dem Ölsumpf 13 über einen Durchgang 19 verbunden.

Das Tauchschmiersystem gemäss Fig. 1 befindet sich auf einer relativ niedrigen Betriebstemperatur, bei welcher der Dehnkörper 16 sich extrem zusammengezogen hat. Ein bestimmter Anteil des Öls wurde daher in den geschlossenen Hohlraum 15 eingesaugt, der nur über den Durchgang 19 mit dem Aussenraum verbunden ist. Die Innenabmessungen des Hohlraums 15, insbesondere aber die Abmessungen und der Temperaturkoeffizient der Ausdehnung des Dehnkörpers 16 sind dabei so bemessen, dass bei Unterschreiten einer unteren Grenz-Betriebstemperatur von beispielsweise −30 °C das Zusammenziehen des Dehnkörpers 16 ein solches Ausmass annimmt, dass sich Füllstände 14, 18 einstellen, bei denen die Zahnräder 12 nicht mehr in den Ölsumpf 13 eintauchen.

Nimmt der Kraftfahrer nun sein Fahrzeug in Betrieb, erfolgt keine Tauchschmierung der Zahnräder 12 und der in Fig. 1 nicht dargestellten Synchronisiermittel, die Synchronisiermittel können daher nicht mit bei dieser tiefen Temperatur hochviskosem Öl verklebt werden und sorgen daher ungeachtet der tiefen Temperatur für normal synchronisierte Schaltvorgänge.

Nach einer sehr kurzen Betriebszeit von beispielsweise einer oder wenigen Minuten hat sich das Getriebe jedoch bereits so weit erwärmt, dass der Dehnkörper 16 sich beträchtlich ausgedehnt hat, wie dies Fig. 2 zeigt. Bei Ausdehnung des Dehnkörpers 16 wird der Ölvorrat 17 durch den Durchgang 19 in den Bereich des Ölsumpfes 13 zurückgedrückt, der Füllstand 21 nimmt daher ab, und der Füllstand 20 des Ölsumpfes 13 nimmt zu. Es stellt sich dann der in Fig. 2 dargestellte normale Betriebszustand des Tauchschmiersystems ein, in dem zumindest ein Teil der Zahnräder 12 in den Ölsumpf 13 eintaucht.

Es versteht sich dabei, dass die Erfindung nicht auf das in den Fig. 1 und 2 dargestellte temperaturabhängige Absaugen bzw. Eindrücken des Öles aus der Ölwanne in den Hohlraum bzw. umgekehrt beschränkt ist. Statt des temperaturabhängigen Saugmechanismus können selbstverständlich auch eine Ölpumpe o.dgl. verwendet werden, die temperaturabhängig gesteuert für einen variablen Füllstand in der Ölwanne sorgt.

Bei dem in Fig. 3 dargestellten Ausführungsbeispiel ist in einem Gehäuse 30 eine Getriebewelle 31 angeordnet, die als Hohlwelle ausgebildet ist. Dabei umschliesst ein Wellenmantel 32 einen Hohlraum 33 der Welle 31. Auf den Wellenmantel 32 sind Zahnräder 34, 35, 36, 37 aufgesetzt. Im Hohlraum 33 befindet sich ein langgestreckter Dehnkörper 38. Das vom Dehnkörper 38 nicht eingenommene Volumen des Hohlraums 33 steht über eine flüssigkeitsdichte Drehkupplung 39, eine Leitung 40 und einen Stutzen 41 mit einem Ölsumpf 42 im Bodenbereich des Gehäuses 30 in Verbindung. Mit 43 ist ein Füllstand bei normalem Betrieb des Tauchschmiersystems bezeichnet, während 44 einen Füllstand bezeichnet, wie er bei extrem kaltem Getriebe eingestellt werden soll.

Die Funktionsweise des in Fig. 3 dargestellten Ausführungsbeispiels entspricht weitgehend der Funktionsweise des in den Fig. 1 und 2 dargestellten Ausführungsbeispiels, mit der Abweichung, dass der Hohlraum 33 der Getriebewelle 31 selbst ausgenutzt wird. Bei tiefen Temperaturen zieht sich der Dehnkörper 38 so weit zusammen, dass Öl aus dem Ölsumpf 42 über den Stutzen 41, die Leitung 40 und die Drehkupplung 39 in den Hohlraum 33 der Getriebewelle 31 eingesaugt wird, so dass bei Erreichen einer unteren Grenz-Betriebstemperatur der Füllstand 44 des Ölsumpfs 42 erreicht wird, bei dem keines der Zahnräder 34 bis 37 mehr in das Öl eintaucht.

Überschreitet das Getriebe gemäss Fig. 3 nun wieder die untere Grenztemperatur nach Inbetriebnahme des Kraftfahrzeuges, dehnt sich der Dehnkörper 38 wieder aus, und das im Hohlraum 33 gespeicherte Öl wird in den Ölsumpf 42 zurückgedrückt.

Es versteht sich, dass zur Erreichung eines maximalen Pumpeffektes durch den Dehnkörper 16 bzw. 38 für diesen ein Material mit möglichst grossem Temperaturkoeffizienten der Ausdehnung zu wählen ist. Besonders bevorzugt ist, als Material eine Chlorfluorkohlenstoff zu verwenden, weil dieses Material in einem für die vorliegenden Anwendungen geeigneten Temperaturbereich verdampft und so bei einer bestimmten Grenztemperatur eine schlagartige Volumenerhöhung bzw. Volumenverminderung eintritt. Das erfindungsgemässe Tauchschmiersystem kann daher mit einer «Schaltcharakteristik» versehen werden, bei der die Tauchschmierung bei einer vorgewählten unteren Grenz-Betriebstemperatur «eingeschaltet» bzw. «ausgeschaltet» wird.

Vor allem bei Verwendung eines verdampfenden Dehnkörpers ist der Dehnkörper erfindungsgemäss in einem elastischen Beutel enthalten, der beim Ausführungsbeispiel gemäss Fig. 1 und 2 mit 22 und beim Ausführungsbeispiel gemäss Fig. 3 mit 45 bezeichnet ist. Der Beutel 45 des Ausführungsbeispiels gemäss Fig. 3 ist dabei bevorzugt langgestreckt ausgebildet, so dass das gesamte Volumen des Hohlraums 33 beeinflusst werden und ein besonders guter Pumpeffekt erzielt werden kann.

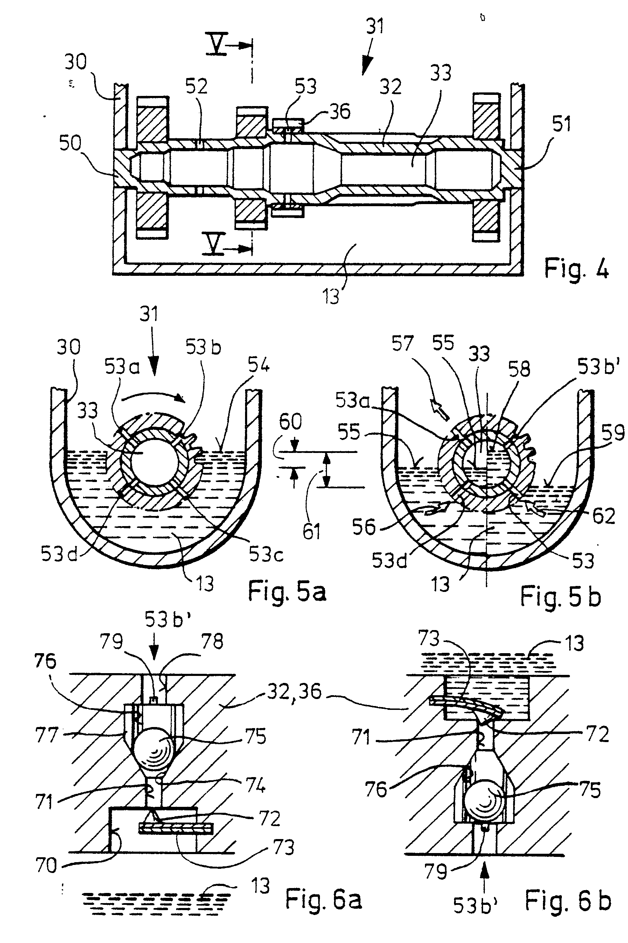

Beim Ausführungsbeispiel gemäss Fig. 4 wird ein Tauchschmiersystem verwendet, das sehr ähnlich dem gemäss Fig. 3 ist. Der Unterschied besteht darin, dass die Getriebewelle 31 an Wellenenden 50, 51 verschlossen ist, somit keine Drehkupplung 39, wie in Fig. 3, vorgesehen ist. Eine Verbindung zwischen dem Hohlraum 33 und dem Ölsumpf 13 wird im Ausführungsbeispiel gemäss Fig. 4 durch radial verlaufende Kanäle 52, 53 hergestellt, von denen vorzugsweise jeweils mehrere über einen Umfang verteilt angeordnet sind. Der Kanal 52 durchsetzt den Wellenmantel 32 an einer zahnradfreien Position, während der Kanal 53 sowohl den Wellenmantel 32 wie auch ein Zahnrad 36, und zwar bis zum Zahngrund, durchsetzt.

Mit dem Tauchschmiersystem gemäss Fig. 4 sind unterschiedliche Varianten und Betriebsweisen möglich, die nachstehend anhand der Fig. 5a und 5b erläutert werden, die jeweils Schnittdarstellungen entlang der Linie V-V von Fig. 4 sind.

In der Darstellung gemäss Fig. 5a erkennt man, dass beispielsweise vier Kanäle 53a, 53b, 53c und 53d über den Umfang verteilt angeordnet sind. Die Darstellung gemäss Fig. 5a zeigt den Betriebszustand des bei normaler Temperatur arbeitenden Getriebes, wie durch einen Pfeil für die umlaufende Getriebewelle 31 angedeutet. Durch Wirkung der Fliehkraft ist der Hohlraum 33 leer, weil das gesamte Öl aus dem Hohlraum 33 durch die genügend weiten Kanäle 53a bis 53d in den Ölsumpf 13 herausgeflossen ist.

In diesem Betriebszustand mit umlaufender Getriebewelle 31 stellt sich beispielsweise ein erster Füllstand 54 ein.

Steht nun das Getriebe still, beispielsweise weil ein mit dem Getriebe ausgerüstetes Fahrzeug abgestellt wurde, geht der erste Füllstand 54 auf einen zweiten Füllstand 55 zurück, der in der linken Hälfte von Fig. 5b eingezeichnet ist. Bei stillstehender Getriebewelle 31 fliesst nämlich das Öl in Richtung eines Pfeiles 56 beispielsweise durch den Kanal 53d und füllt dort den Hohlraum 33 teilweise aus, wobei sich gleiche zweite Füllstände 55 im Ölsumpf 13 und im Hohlraum 33 ausbilden, weil die beiden miteinander kommunizieren. Damit das Öl bei 56 in den Kanal 53d einströmen kann, verlässt andererseits im Hohlraum 33 zuvor vorhandene Luft den Hohlraum 33 durch den Kanal 53a in Richtung des Pfeiles 57.

Bei einer Variante des Tauchschmiersystems, wie es in der rechten Hälfte von Fig. 5b dargestellt ist, ist in diesem Betriebszustand vorgesehen, einen Kanal 53b' zu verschliessen. Es wird nun das Öl zunächst in Richtung des Pfeiles 62 in den Kanal 53c einströmen, bis ein Zustand gemäss der linken Hälfte von Fig. 5b vorliegt. Bei geschlossenem Kanal 53b' zieht sich nun jedoch die im Hohlraum 33 verbleibende Restluft und das Öl bei Abkühlung des Getriebes zusammen, so dass weiteres Öl durch den Kanal 53c in Richtung des Pfeiles 62 eingesaugt wird. Bei Erreichen der tiefsten Temperatur stellt sich nun im Hohlraum 33 ein dritter Füllstand 58 ein, der höher als der zweite Füllstand 55 liegt, während im Ölsumpf 13 sich ein vierter Füllstand 59 eingestellt hat, der niedriger als die beiden vorgenannten Füllstände 55 und 63 ist.

Zwischen den Fig. 5a und 5b ist die erreichbare Absenkung des im Betrieb vorliegenden ersten Füllstandes 54 mit einer Füllstandsdifferenz 60 für das Ausführungsbeispiel gemäss der linken Hälfte von Fig. 5b und mit einer Füllstandsdifferenz 61 für das Ausführungsbeispiel gemäss der rechten Hälfte von Fig. 5b nochmals dargestellt.

In den Fig. 6a und 6b sind Ventile dargestellt, wie sie zum Verschliessen des Kanales 53b' in Fig. 5b, rechte Hälfte, verwendbar sind.

Fig. 6a zeigt den Betriebsfall der rechten Hälfte von Fig. 5b, bei dem das Ventil nach oben geneigt angeordnet ist und sich das Getriebe auf einer relativ hohen Temperatur befindet. Fig. 6b zeigt demgegenüber den Betriebsfall, bei dem das Ventil infolge Drehung der Getriebewelle 31 nach unten geneigt angeordnet ist und ausserdem das Getriebe eine verhältnismässig tiefe Temperatur aufweist.

Man erkennt aus den Fig. 6a und 6b, dass, in Fig. 6a von unten gesehen, der Kanal 53b' zunächst aus einer verhältnismässig grossen ersten Bohrung besteht, an die sich ein verhältnismässig enger Kanal 71 anschliesst. Im Übergang von der ersten Bohrung 70 zum Kanal 71 befindet sich ein temperaturabhängig betätigtes Ventil, das in extrem vereinfachter Darstellung von einem Ventilkegel 72 und einem Bimetallhalter 73 gebildet wird. Oberhalb des Kanals 71 schliesst sich ein nach oben öffnender Ventilkegel 72 an, der in eine zweite Bohrung 76 übergeht, in der eine Kugel 75 läuft. Die Bohrung 76 ist mit seitlichen, an der Kugel 75 vorbeilaufenden Längsnuten 77 versehen. Am oberen Ende geht die Bohrung 76 in einen engeren Kanal 78 über, wobei die Bohrung 78 von einem Steg 79 überquert wird.

Die Anordnung gemäss den Fig. 6a und 6b dient zwei unterschiedlichen Zielen.

Zum einen ist das aus der Öffnung des Kanals 71, dem Ventilkegel 72 und dem Bimetallhalter 73 bestehende temperaturgesteuerte Ventil dazu vorgesehen, um bei sehr niedrigen Betriebstemperaturen das Öl im Hohlraum 33 der Getriebewelle 31 zu halten. Bei üblicher, relativ hoher Betriebstemperatur öffnet das Ventil durch Abheben des Ventilkegels 72 infolge Verformung des Bimetallhalters 73, wie dies in Fig. 6a dargestellt ist, und es kann sich die in Fig. 5a dargestellte Betriebsweise ergeben, bei der das Öl unter Fliehkrafteinfluss aus dem Hohlraum 33 der Getriebewelle 31 herausgeschleudert wird.

Hat sich jedoch nach dem Stillsetzen des Getriebes auf eine der beschriebenen oder noch zu beschreibenden Weisen der Hohlraum 33 mit Öl gefüllt und ist die Betriebstemperatur stark abgesunken, stellt sich die in Fig. 6b dargestellte Stellung des Bimetallhalters 73 ein, bei der der Ventilkegel 72 den Kanal 71 versperrt. Das im Hohlraum 33 enthaltene Öl wird nun so lange dort festgehalten und damit der abgesenkte Füllstand 55 bzw. 59 im Ölsumpf 13 so lange aufrecht erhalten, bis sich eine Betriebstemperatur des Getriebes eingestellt hat, bei der das Ventil 71/72/73 wieder öffnet.

Eine davon unabhängige Funktion hat das aus der Kugel 75 und dem Kegelsitz 74 bestehende Ventil. Dieses dient in der Position gemäss Fig. 6a, die dem Betriebsfall der rechten Hälfte gemäss Fig. 5b entspricht, dazu, ein weiteres Einsaugen von Öl in den Hohlraum 33 dadurch zu ermöglichen, dass die Verbindung des Hohlraums 33 mit dem umgebenden Aussenraum oberhalb des Ölsumpfes 13 verschlossen wird. Hierzu fällt die Kugel 75 unter Schwerkrafteinfluss auf den Kegelsitz 74 und versperrt damit den Kanal 71. Die an der unteren Hälfte der Getriebewelle 31 befindlichen Ventile befinden sich hingegen in der in Fig. 6b gezeigten Stellung, in der die Kugel 75 auf dem Steg 79 aufliegt und Öl durch den Kanal 78, die Längsnuten 77, den Kanal 71 und die erste Bohrung 70 in den Ölsumpf 13 eingesaugt werden kann. Es versteht sich, dass solange noch Öl auf diese Weise eingesaugt wird, der Ventilkegel 72 entgegen der Darstellung gemäss Fig. 6b noch vom Kanal 71 abgehoben ist und erst bei Erreichen der Endtemperatur schliesst.

Die Kugel 75 nimmt bei normalem Betrieb des Getriebes gemäss Fig. 5a ebenfalls die in Fig. 6b gezeigte Stellung ein, weil sie sich unter Fliehkrafteinfluss dann ständig an den Steg 79 anlegt.

**Patentansprüche**

1. Schmiersystem für Getriebe von Kraftfahrzeugen mit einem an seiner Unterseite einen Ölsumpf (13; 42) bildenden Gehäuse (10; 30), mit einer Zahnräder (12; 34 bis 37) aufweisenden Getriebewelle (11; 31), mit einem Hohlraum (15; 33) und mit Mitteln zum Überführen von Öl zwischen dem Ölsumpf (13; 42) und dem Hohlraum (15; 33) in Abhängigkeit von der Betriebstemperatur des Getriebes, dadurch gekennzeichnet, dass die Zahnräder (12; 34 bis 37) bei vollständig gefülltem Ölsumpf (13; 42) mindestens teilweise in das Öl eintauchen und dass bei niedriger Betriebstemperatur des Getriebes Öl aus dem Ölsumpf (13; 42) in den Hohlraum (15; 33) überführt wird.

2. Schmiersystem nach Anspruch 1, dadurch gekennzeichnet, dass das Öl durch Absaugen überführt wird.

3. Schmiersystem nach Anspruch 2, dadurch gekennzeichnet, dass durch das Absaugen der Füllstand (14, 20; 43, 44) so weit abgesenkt wird, dass bei einer vorgegebenen unteren Grenz-Betriebstemperatur die Zahnräder (12; 34 bis 37) nicht mehr in das Öl eintauchen.

4. Schmiersystem nach Anspruch 2 oder 3, dadurch gekennzeichnet, dass der Hohlraum (15; 33) teilweise mit einem Material gefüllt ist, das einen grossen Temperaturkoeffizienten der Ausdehnung aufweist.

5. Schmiersystem nach Anspruch 3 und 4, dadurch gekennzeichnet, dass das Material in einem elastischen Beutel (22; 45) enthalten ist und bei Überschreiten der Grenz-Betriebstemperatur verdampft.

6. Schmiersystem nach Anspruch 5, dadurch gekennzeichnet, dass das Material ein Chlorfluorkohlenstoff ist.

7. Schmiersystem nach einem der Ansprüche 1 bis 6, dadurch gekennzeichnet, dass der Hohlraum (15) seitlich vom Gehäuse (10) angeordnet und mit dem Ölsumpf (13) über einen Durchgang (19) verbunden ist.

8. Schmiersystem nach einem der Ansprüche 1 bis 7, dadurch gekennzeichnet, dass der Hohlraum (33) einer hohlen Getriebewelle (31) ist.

9. Schmiersystem nach Anspruch 8, dadurch gekennzeichnet, dass der Hohlraum (33) über eine flüssigkeitsdichte Drehkupplung (39) und eine Leitung (40) mit dem Ölsumpf (42) verbunden ist.

10. Schmiersystem nach Anspruch 8, dadurch gekennzeichnet, dass der Hohlraum (33) über radiale, durch einen Wellenmantel (32) bzw. durch den Wellenmantel (32) und Zahnräder (36) führende Kanäle (52, 53) mit dem Ölsumpf (13) verbunden ist.

11. Schmiersystem nach Anspruch 10, dadurch gekennzeichnet, dass der lichte Querschnitt der Kanäle (52, 53) so bemessen ist, dass das Öl die Kanäle (52, 53) nicht mehr zu durchfliessen vermag, wenn seine Temperatur auf die niedrige Betriebstemperatur absinkt.

12. Schmiersystem nach Anspruch 10 oder 11, dadurch gekennzeichnet, dass in den Kanälen (53b') Ventile angeordnet sind, die die Kanäle (53b') versperren, wenn die Temperatur auf die niedrige Betriebstemperatur absinkt.

13. Schmiersystem nach einem der Ansprüche 10 bis 12, dadurch gekennzeichnet, dass in den Kanälen (53b') Ventile angeordnet sind, die die Kanäle (53b') versperren, wenn sie sich bei Drehung der Getriebewelle (31) in einer nach oben geneigten Position befinden.

14. Schmiersystem nach Anspruch 13, dadurch gekennzeichnet, dass ein Schliessglied (74, 75) das Ventil in der geneigten Position unter Schwerkrafteinfluss schliesst.

## Revendications

1. Système de lubrification pour boite de vitesses de véhicules à moteur comprenant un carter (10; 30) formant sur son côté inférieur une cuvette-carter à huile (13; 42) avec un arbre de harnais d'engrenages (11; 31) présentant des roues dentées (12; 34 à 37), avec une cavité (15; 33) et des moyens pour faire passer l'huile entre la cuvette-carter à huile (13; 42) et la cavité 15; 33) en fonction de la température de fonctionnement de la boite de vitesses, caractérisé en ce que les roues dentées (12; 34 à 37) sont, lorsque la cuvette-carter à huile (13; 42) est complètement remplie, au moins partiellement immergées dans l'huile et que, à la température de fonctionnement plus basse de la boite de vitesses, l'huile est envoyée depuis la cuvette-carter à huile (13; 42) dans la cavité (15; 33).

2. Système de lubrification selon la revendication 1, caractérisé en ce que l'huile est transportée par aspiration.

3. Système de lubrification selon la revendication 2, caractérisé en ce que le niveau (14, 20; 43, 44) est abaissé par aspiration jusqu'à ce que, pour une température de fonctionnement limite inférieure prédéterminée, les roues dentées (12; 34–37) ne soient plus immergées dans l'huile.

4. Système de lubrification selon la revendication 2 ou 3, caractérisé en ce que la cavité (15; 33) est partiellement remplie d'une matière qui présente un grand coefficient de dilatation.

5. Système de lubrification selon la revendication 3 ou 4, caractérisé en ce que la matière est contenue dans une poche élastique (22; 45) et se vaporise lorsque l'on dépasse la température limite de fonctionnement.

6. Système de lubrification selon la revendication 5, caractérisé en ce que la matière est un chlorofluoro-carbone.

7. Système de lubrification selon l'une des revendications 1 à 6, caractérisé en ce que la cavité (15) est disposée sur le côté du carter (10) et est reliée à la cuvette-carter à huile (13) par un passage (19).

8. Système de lubrification selon l'une des revendications 1 à 7, caractérisé en ce que la cavité (33) est un arbre creux de harnais d'engrenage (31).

9. Système de lubrification selon la revendication 8, caractérisé en ce que la cavité (33) est reliée à la cuvette-carter à huile (42) par un joint tournant étanche (39) et une conduite (40).

10. Système de lubrification selon la revendication 8, caractérisé en ce que la cavité (33) est reliée à la cuvette-carter à huile (42) par des canaux (52, 53) radiaux traversant un manteau d'arbre (33) ou un manteau d'arbre (33) et les roues dentées (36).

11. Système de lubrification selon la revendication 10, caractérisé en ce que le diamètre libre des canaux (52, 53) est tel que l'huile ne peut plus traverser les canaux (52, 53), lorsque sa température descend au niveau de la température de bas régime.

12. Système de lubrification selon la revendication 10 ou 11, caractérisé en ce que dans les canaux (53b') sont disposées des soupapes, qui ferment les canaux (53b'), lorsque la température descend au niveau de la température de bas régime.

13. Système de lubrification selon la revendication 10 à 12, caractérisé en ce que, dans les canaux (53b') sont disposées des soupapes, qui ferment les canaux (53b') lorsqu'elles se trouvent, lors de la rotation de l'arbre de harnais d'engrenage (31), dans une position inclinée vers le haut.

14. Système de lubrification selon la revendication 13, caractérisé en ce qu'un élément de fermeture (74, 75) ferme la soupape, sous l'effet de la pesanteur, dans la position inclinée.

## Claims

1. Lubrication system for gearboxes of motor vehicles having a housing (10; 30) forming an oil sump (13; 42) at its underside, having a gearbox shaft (11; 31) exhibiting toothed wheels (12; 34 to 37), having a cavity (15; 33) and having means to transfer oil between the oil sump (13; 42) and the cavity (15; 33) as a function of the operating temperature of the gearbox, characterized in that the toothed wheels (12; 34 to 37) are immersed at least partly in the oil when the oil sump (13; 42) is completely full and that oil is transferred out of the oil sump (13; 42) into the cavity (15; 33) at low operating temperatures of the gearbox.

2. Lubrication system according to Claim 1, characterized in that the oil is transferred by suction.

3. Lubrication system according to Claim 2, characterized in that the level (14, 20; 43, 44) is lowered so far by the suction that the toothed wheels (12; 34 to 37) are no longer immersed in the oil at a prescribed lower limit operating temperature.

4. Lubrication system according to Claim 2 or 3, characterized in that the cavity (15; 33) is filled partly with a material which exhibits a high temperature coefficient of expansion.

5. Lubrication system according to Claims 3 and 4, characterized in that the material is contained in a resilient bag (22; 45) and evaporates when the limit operating temperature is exceeded.

6. Lubrication system according to Claim 5, characterized in that the material is a chlorofluorocarbon.

7. Lubrication system according to any of Claims 1 to 6, characterized in that the cavity (15) is arranged laterally of the housing (10) and is connected to the oil sump (13) by a passage (19).

8. Lubrication system according to any of Claims 1 to 7, characterized in that (lacuna) is the cavity (33) of a hollow gearbox shaft (31).

9. Lubrication system according to Claim 8, characterized in that the cavity (33) is connected to the oil sump (42) by a liquid-tight rotary coupling (39) and a pipe (40).

10. Lubrication system according to Claim 8, characterized in that the cavity (33) is connected to the oil sump (13) by radial ducts (52, 53) leading through a shaft jacket (32) or through the shaft jacket (32) and toothed wheels (36).

11. Lubrication system according to Claim 10, characterized in that the inside cross-section of the ducts (52, 53) is dimensioned so that the oil can no longer flow through the ducts (52, 53) when its temperature falls to the low operating temperature.

12. Lubrication system according to Claim 10 or 11, characterized in that valves which shut off the ducts (53b') when the temperature falls to the low operating temperature are arranged in the ducts (53b').

13. Lubrication system according to any of Claims 10 to 12, characterized in that valves which shut off the ducts (53b') when they occupy an upwardly inclined position during the rotation of the gearbox shaft (31) are arranged in the ducts (53b').

14. Lubrication system according to Claim 13, characterized in that a closure element (74, 75) closes the valve in the inclined position by the effect of gravity.

Fig. 1

Fig. 2

Fig. 3

Fig. 4

Fig. 5a

Fig. 5 b

Fig. 6a

Fig. 6 b